# EUROPEAN PATENT SPECIFICATION

(11) **EP 3 444 094 B1**
(45) Date of publication and mention of the grant of the patent: **12.08.2020**
(21) Application number: 18000509.2
(22) Date of filing: 08.06.2018
(51) Int. Cl.: B29C 43/20, A47K 13/30

(54) **HEATED TOILET SEAT AND MANUFACTURING METHOD THEREOF**
BEHEIZTER TOILETTENSITZ UND VERFAHREN ZU SEINER HERSTELLUNG
LUNETTE DE TOILETTES CHAUFFÉE ET PROCÉDÉ POUR SA FABRICATION

(30) Priority: 18.08.2017 CN 201710712858
(43) Date of publication of application: 20.02.2019
(73) Proprietor: Xiamen Moext Intelligent Technology Co., Ltd., Xiamen, Fujian 361000 (CN)
(72) Inventor: Gong, Binhua, Fujian 361000 (CN)
(74) Representative: Verscht, Thomas Kurt Albert

(56) References cited:
- EP-A1- 3 272 259
- CN-Y- 201 316 225
- DE-A1-102010 037 800
- DE-A1-102015 112 819
- DE-A1-102016 108 379
- GB-A- 838 243

## Description

### Technical filed

The present invention relates to sanitary ware field, particularly to a toilet seat and manufacturing method thereof.

### Related art

Existing toilet seat with heating function is manufactured by a method that the top cover and the bottom cover are separately made, then the heating element is disposed between the top cover and the bottom cover, finally screws are inserted from the bottom portion of the bottom cover to fix the top cover and the bottom cover, or the top cover is welded to the bottom cover. The finished toilet seat has heating function. However, this kind of seat is not attractive and the manufacture is complicated. Moreover, this kind of seat is not save that water may enter the interior from the gap.

A patent titled Toilet Seat and Manufacturing Method Thereof is published in the Chinese patent database with publishing number CN201280052395.9. The method comprises: a primary injecting operation to inject a resin into an upper injection mold and a lower injection mold to injection mold an upper body and a lower body constituting a toilet seat body; a heater mounting operation to mount a heater on one surface of the upper body by using a heater jig; a secondary injecting operation to inject a resin in a state in which the upper body and the lower body are brought into contact with each other, to close a gap in the toilet seat body; and a toilet seat body extracting operation to extract the toilet seat body from the upper injection mold and the lower injection mold. This method provides no gap and high security, but there are disadvantages that the injection machines cost high, namely a high machine cost, and thermosetting resin can not be adopted.

Another method is printing, as disclosed in CN200820203109.5 titled heating toilet cover. The heating toilet cover comprises a toilet cover and an electrical heating device. The electrical heating device comparing carbon heating material connected to a heat-conduction body is directly disposed on the toilet cover and the carbon heating material is coated or protected, making the toilet cover, the carbon heating material and the coating or protection coating form an entire structure. This method adopts screen printing technology to print the carbon heating material onto the toilet cover. However, this kind of the seat surface needs an oil paint coating4/5 or plastic thin film for insulation reason, which is bad for the people's skin on one hand and may bring secure risk after a long service of the oil paint coating or the thin film on the other hand. From DE 10 2010 037 800 A1 a forming method for toilet seat integrally formed with embedded heating wire is known which involves using primarily plastic material or glass fiber reinforced plastic to embed heating wire to integrally form toilet seat with embedded heating wire.

From DE 10 2016 108 379 A1 a toilet seat comprising a sensor arrangement for sensing health parameter is known. Moreover, a program for analyzing the signals sensed by the toilet seat is disclosed.

From DE 2015 112 819 A1 a toilet seat comprising a heating element is known, wherein the heating element is arranged on a body of the seat and covered by a thin cover layer.

From EP 3 272 259 A1 a sanitary device is known, comprising a ring- or U-shaped seat, an electric heating element arranged at or within the seat, a power unit adapted to provide an operation power to the heating element and a control unit adapted to control the operation power provided by the power unit, whereby a resistor is connected or connectable in series to the heating element, whereby the control unit is adapted to measure a voltage on a measuring point between the resistor and the heating element in a connected state and to control the operation power depending on the measured voltage.

### Summary of the invention

The present invention provides manufacturing method of a toilet seat to overcome the disadvantages of the existing known technology.

Disclosed is a toilet seat, wherein comprising a toilet seat body made of thermosetting resin, the toilet seat body is buried with heating element, the burying is a seamless and direct connection between the toilet seat body and the heating element.

In another preferred embodiment, the thermosetting resin is urea resin.

In another preferred embodiment, the burying means the heating element is once formed in the toilet seat body.

In another preferred embodiment, the toilet seat body comprises a primary formed toilet seat portion and a secondary formed toilet seat portion, the heating element is disposed between the primary formed toilet seat portion and the secondary formed toilet seat portion, the connection portion of the primary formed toilet seat portion and the secondary formed toilet seat portion is seamless.

In another preferred embodiment, the heating element comprises a heating wire or a heat-conduction film.

Disclosed is a toilet seat toilet seat body, wherein the toilet seat body is buried with heating element, the toilet seat body is disposed without a chamber; the toilet seat body comprises a primary formed toilet seat portion and a secondary formed toilet seat portion, the heating element and the thermosetting resin material of the secondary formed toilet seat portion are disposed on the primary formed seat portion before the forming and solidification of the primary formed seat portion.

Method of manufacturing a toilet seat, wherein comprising the steps:
1) providing thermosetting resin particles and two mould sets with top and bottom moulds; the two mould sets share the same bottom mould;
2) paving a first layer of urea resin particles on the first mould set of a compression machine; closing the top mould of the first mould set, and forming a primary formed toilet seat portion; opening and moving the top mould of the first mould set;
3) laying a heating element on the primary formed toilet seat portion;
4) paving a second layer of urea resin particles on the heating element and the primary formed toilet seat portion;
5) closing the top mould of the second mould set and proceeding with compression molding.

Therein, the step 3), 4) and 5) are taking under that the temperature of top mould of step 2) is not significantly decreased; preferred, the temperature of the bottom mould is at least 50°C higher than the molding temperature of the urea resin; further preferred, the temperature of the bottom mould is at least 40°C higher than the molding temperature of the urea resin; moreover preferred, the temperature of the bottom mould is at least 30°C higher the molding temperature of the urea resin.

The shape of the top mould of the second mould set is provided that it does not harm to the heating element during compressing.

In another preferred embodiment, the thermosetting resin is urea resin.

In another preferred embodiment, the heating element comprises a heating wire or a heat-conduction film.

Compared to the existing known technology, the technical solution of the present invention has following advantages: the heating element of the present invention is sealed in the resin that provides high security. Existing products need later screwing or welding to seal the heating element between the top portion and the bottom portion. But no welding is needed in the present invention with two simple compressions. The manufacturing is easy. As the thermosetting resin isn't suitable for secondary forming, the present invention improves the compression technology that the primary formed portion is compressed with the secondary formed portion before the curing of the primary formed portion, making the seat be a once-formed structure without any chamber.

### Brief description of the drawings

The present invention will be further described with the drawings and embodiments.
FIGS 1-8 illustrate the manufacturing flow of the present invention.
FIG.1 illustrates the bottom mould (lower drawing) and its section view (upper drawing).
FIG.2 illustrates the bottom mould added with urea resin particles at the first moulding (lower drawing) and its section view (upper drawing).
FIG.3 illustrates the coupling structure of the bottom mould and the first top mould.
FIG.4 illustrates the closing bottom mould and first top mould at the first forming and the heating element.
FIG.5 illustrates the primary formed seat with the heating element.
FIG.6 illustrates the seat with heating element being added with urea resin particles at the second time.
FIG. 7 illustrates the closing bottom mould and second top mould at the second forming.
FIG.8 illustrates the finished seat.
FIG.9 illustrates the primary formed seat.
FIG. 10 illustrates the secondary formed seat.

Reference signs: 1- bottom mould, 2- first top mould, 3- heating element, 4- primary formed toilet seat portion, 5- urea resin, 6- second top mould, 7- secondary formed seat portion, 8-finished seat

### Detailed description of the embodiments

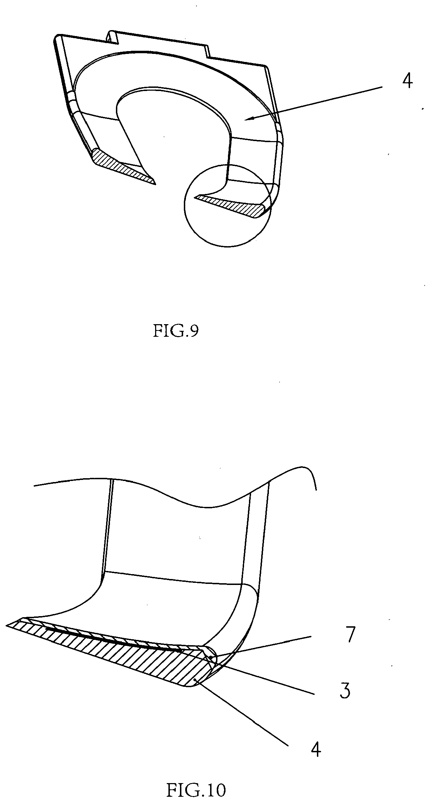

Referring to FIG.9 and FIG.10, the toilet seat of the present invention comprises a urea resin toilet seat body and a heating element 3 buried in the urea resin toilet seat body. Therein, the urea resin toilet seat body comprises a primary formed toilet seat portion 4 and a secondary formed toilet seat portion 7.

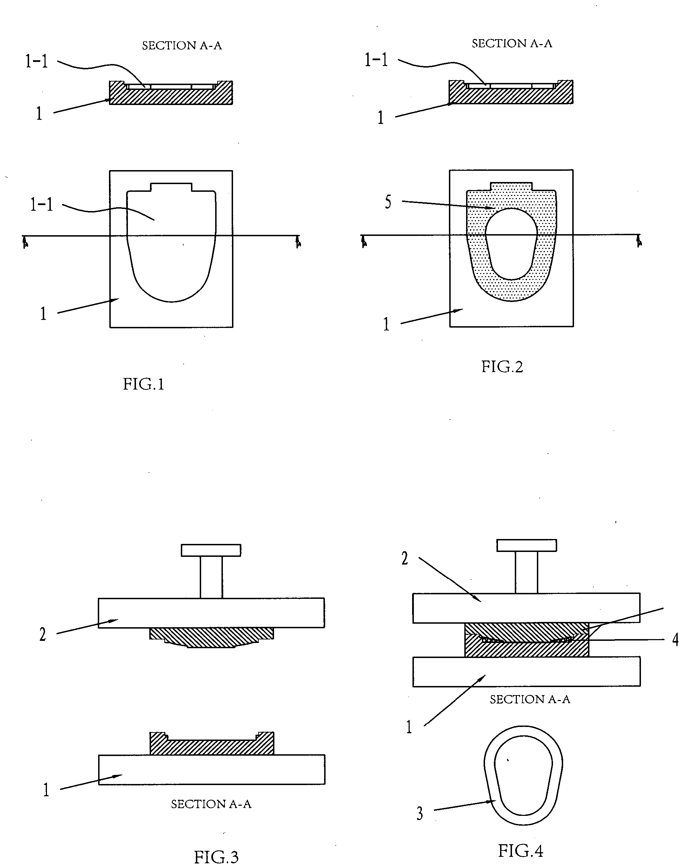

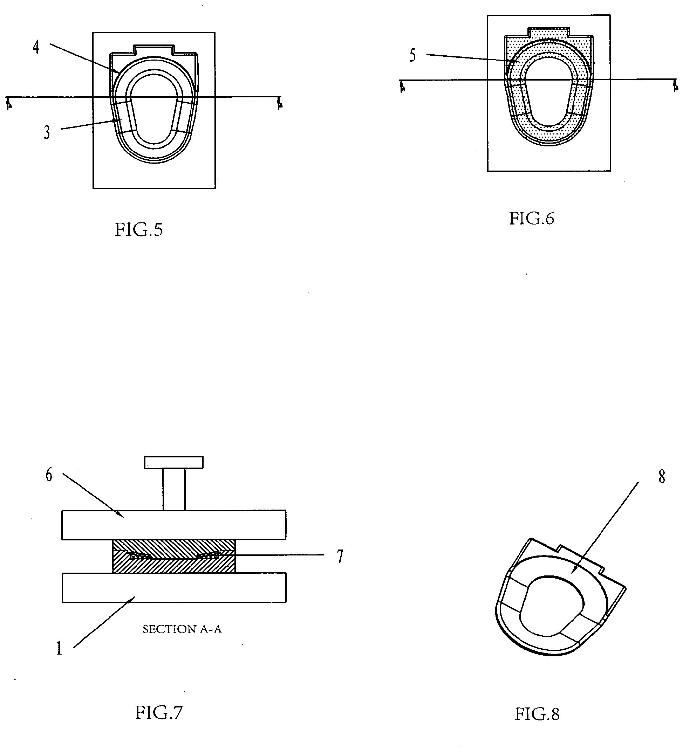

Referring to FIGS 1-8, a method of manufacturing the toilet seat of the present invention comprises the step:
Providing urea resin particle and two mould sets with top and bottom mould; the first mould set comprises a bottom mould 1 and a first top mould 2, the second mould set comprises the bottom mould 1 and a second top mould 6, namely, the two mould sets share the bottom mould 1.
Referring to FIG. 1 and FIG.2, a first layer of urea resin particles is paved in the mould chamber 1-1 of the bottom mould 1; referring to FIG.3 and FIG.4, the first top mould 2 is closed and compressed, the primary formed toilet seat portion 4 is formed in the mould chamber 1-1; opening and moving the first top mould 2;
Referring to FIG.5, a heating element 3 is disposed on the primary formed toilet seat portion 4;
Referring to FIG.6, a second layer of urea resin particles 5 is paved on the heating element 3 and the primary formed toilet seat portion;
Referring to FIG.7, closing the top mould of the second mould set and proceeding with compression molding to obtain the finished seat 8.

As can be seen from FIG. 10, the heating element 3 is tightly contacted with the primary formed toilet seat portion and the secondary formed toilet seat portion.

In the present invention, the temperatures of the two compressions can be determined by the molding temperature of the urea resin. The steps of FIG.5, FIG.6 and FIG.7 are taking under that the temperature of bottom mould is not significantly decreased; preferred, the temperature of the bottom mould is at least 50°C higher than the molding temperature of the urea resin; further preferred, the temperature of the bottom mould is at least 40°C higher than the molding temperature of the urea resin; moreover preferred, the temperature of the bottom mould is at least 30°C higher than the molding temperature of the urea resin,

The present invention may be summarized as follows: Disclosed is a toilet seat and manufacturing method thereof, the toilet seat comprises a toilet seat body made of thermosetting resin, the toilet seat body is buried with heating element. The method comprises the steps: 1) providing thermosetting resin particles and two mould sets with top and bottom moulds; the two mould sets share the same bottom mould; 2) paving a first layer of urea resin particles on the first mould set of a compression machine; closing the top mould of the first mould set, and forming a primary formed toilet seat portion; opening and moving the top mould of the first mould set; 3) laying a heating element on the primary formed toilet seat portion; 4) paving a second layer of urea resin particles on the heating element and the primary formed toilet seat portion; 5) closing the top mould of the second mould set and proceeding with compression molding. The manufacturing method of the present invention is easy, and the products are attractive and safer. Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. Method of manufacturing a toilet seat, wherein comprising the steps:
1) providing thermosetting resin particles and two mould sets with top and bottom moulds; the two mould sets share the same bottom mould;
2) paving a first layer of urea resin particles on the first mould set of a compression molding machine; closing the top mould of the first mould set, and forming a primary formed toilet seat portion; opening and moving the top mould of the first mould set;
3) laying a heating element on the primary formed toilet seat portion;
4) paving a second layer of urea resin particles on the heating element and the primary formed toilet seat portion;
5) closing the top mould of the second mould set and proceeding with compression molding.

2. The method according to claim 1, wherein the heating element comprises a heating wire or a heat-conduction film.

3. The method according to claim 1 and/or 2, wherein the heating element is encased with a protection sleeve.

4. The method according to any one or more of claims 1 to 3, wherein the secondary compression molding is proceeding under a condition that the temperature of the bottom mould is at least 50°C higher than the temperature of the first compression molding.

## Patentansprüche

1. Verfahren zur Herstellung eines Toilettensitzes, wobei dies die folgenden Schritte aufweist:
1) Vorsehen von Duroplast-Harzpartikeln und zwei Formsätzen mit oberen und unteren Formen; die zwei Formsätze teilen sich dieselbe untere Form.
2) Pflastern einer ersten Schicht von Harnstoff-Harzpartikeln auf dem ersten Formsatz einer Formpressmaschine; Schließen der oberen Form des ersten Formsatzes und Bilden eines primären geformten Toilettensitzteils; Öffnen und Bewegen der oberen Form des ersten Formsatzes;
3) Legen eines Heizelements auf den primären geformten Toilettensitzteil;
4) Pflastern einer zweiten Schicht von Harnstoff-Harzpartikeln auf das Heizelement und den primären geformten Toilettensitzteil;
5) Schließen der oberen Form des zweiten Formsatzes und Fortfahren mit dem Formpressen.

2. Das Verfahren nach Anspruch 1, wobei das Heizelement einen Heizdraht oder einen Wärmeleitungsfilm aufweist.

3. Das Verfahren nach Anspruch 1 und/oder 2, wobei das Heizelement mit einer Schutzhülse ummantelt ist.

4. Das Verfahren nach einem oder mehreren der Ansprüche 1 bis 3, wobei das sekundäre Formpressen unter einer Bedingung fortfährt, dass die Temperatur der unteren Form wenigstens 50°C höher als die Temperatur des ersten Formpressens ist.

## Revendications

1. Procédé de fabrication d'une lunette de toilettes, comprenant les étapes :
1) prévoir des particules de résine thermodurcissable et deux ensembles de moules avec des moules supérieur et inférieur ; les deux ensembles de moules partagent le même moule inférieur ;
2) poser une première couche de particules de résine d'urée sur le premier ensemble de moules d'une machine de moulage par compression ; fermer le moule supérieur du premier ensemble de moules, et former une partie de lunette de toilettes formée primaire ; ouvrir et déplacer le moule supérieur du premier ensemble de moules ;
3) placer un élément chauffant sur la partie de lunette de toilettes formée primaire ;
4) poser une deuxième couche de particules de résine d'urée sur l'élément chauffant et la partie de lunette de toilettes formée primaire ;
5) fermer le moule supérieur du deuxième ensemble de moules et procéder au moulage par compression.

2. Procédé selon la revendication 1, dans lequel l'élément chauffant comprend un fil chauffant ou un film conducteur de chaleur.

3. Procédé selon la revendication 1 et/ou 2, dans lequel l'élément chauffant est enrobé avec un manchon de protection.

4. Procédé selon l'une au moins des revendications 1 à 3, dans lequel le moulage par compression secondaire procède dans une condition où la température du moule inférieur est supérieure d'au moins 50°C à la température du premier moulage par compression.
